## Europäisches Patentamt

## European Patent Office

## Office européen des brevets

(11) Veröffentlichungsnummer: **0 247 400**
**B1**

(12) **EUROPÄISCHE PATENTSCHRIFT**

(45) Veröffentlichungstag der Patentschrift:
26.04.89

(51) Int. Cl.⁴: **F16D 23/14**

(21) Anmeldenummer: **87106550.4**

(22) Anmeldetag: **06.05.87**

(54) **Kupplungsausrücklager.**

(30) Priorität: **30.05.86 DE 3618273**

(43) Veröffentlichungstag der Anmeldung:
**02.12.87 Patentblatt 87/49**

(45) Bekanntmachung des Hinweises auf die Patenterteilung:
**26.04.89 Patentblatt 89/17**

(84) Benannte Vertragsstaaten:
**DE ES FR GB IT**

(56) Entgegenhaltungen:
**DE-C- 841 085**
**FR-A- 1 473 654**
**FR-A- 1 598 241**
**FR-A- 2 465 120**
**FR-A- 2 559 861**
**GB-A- 666 793**

(73) Patentinhaber: **INA Wälzlager Schaeffler KG,
Industriestrasse 1-3 Postfach 1220,
D-8522 Herzogenaurach(DE)**

(72) Erfinder: **Parzefall, Walter, Kettelerstrasse 1,
D-8526 Bubenreuth(DE)**
Erfinder: **Scholian, Horst, Steinstrasse 5,
D-8521 Aurachtal(DE)**

(74) Vertreter: **Klug, Horst, Dipl.-Ing. (FH), c/o INA Wälzlager
Schaeffler KG Postfach 12 20,
D-8522 Herzogenaurach(DE)**

ACTORUM AG

## Beschreibung

Die Erfindung betrifft ein Kupplungsausrücklager, bestehend aus einem Wälzlager mit zwei konzentrischen Laufringen, zwischen denen Wälzkörper abrollen, und das radial verschiebbar auf einer Schiebehülse aus polymerem Werkstoff angeordnet ist, und dessen einer Laufring einen Radialbord aufweist, der zwischen einem Radialflansch der Schiebehülse einerseits und einer Tellerfeder andererseits eingespannt ist, die in ihrem radial inneren Bereich in einzelne Zungen unterteilt ist, mit denen sie sich in einer Umfangsnut der Schiebehülse abstützt.

Es sind Kupplungsausrücklager bekannt, bei denen die Zungen der Tellerfeder an ihren der Nut zugewandten Enden deutlich verjüngt sind (siehe z.B. FR-A 2 465 120). Der Nachteil dieser Ausführungsform liegt darin, daß durch die geringe Breite der Abstützzungen an der Nut der polymeren Schiebehülse ein Einarbeiten auftritt, und somit die Funktionsfähigkeit des Kupplungsausrücklagers beeinträchtigt wird (DE-OS 3 414 106).

Der Erfindung liegt die Aufgabe zugrunde, durch eine besondere Ausgestaltung der Abstützzungen an ihren der Nut zugewandten Enden, ein Einarbeiten in die Nut der polymeren Schiebehülse zu verhindern, um so die Funktion des Kupplungsausrücklagers über lange Zeit aufrechtzuerhalten.

Erfindungsgemäß wird diese Aufgabe dadurch gelöst, daß die Zungen an ihren der Nut zugewandten Enden deutlich breiter sind als an ihren entgegengesetzten Enden. Durch die vergrößerte Abstützfläche wird die Flächenbelastung verringert, so daß ein Einarbeiten verhindert oder zumindest verzögert ist.

Eine Ausführungsform der Erfindung sieht vor, daß die der Nut zugewandten Enden so verbreitert sind, daß sie in Umfangsrichtung nur durch schmale Schlitze voneinander getrennt sind, so daß annähernd der gesamte innere Umfang zum Abstützen herangezogen wird.

Eine weitere Ausführungsform der Erfindung sieht vor, daß die der Nut zugewandten Enden jeweils mehrerer aufeinanderfolgender Zungen durch einen Steg miteinander verbunden sind, was eine weitere Vergrößerung der Abstützfläche bewirkt.

Eine andere Ausführungsform der Erfindung sieht vor, daß die Zungen geringer zur Achse der Tellerfeder geneigt sind, als ein radial äußerer Bereich der Tellerfeder, was die Montage der Tellerfeder auf die Schiebehülse wesentlich erleichtert.

In den Zeichnungen sind Ausführungsbeispiele der Erfindung dargestellt. Es zeigen:

Fig. 1 einen Längsschnitt durch ein Kupplungsausrücklager und

Fig. 2 bis 4 Ausführungsformen der Tellerfeder, jeweils in Draufsicht.

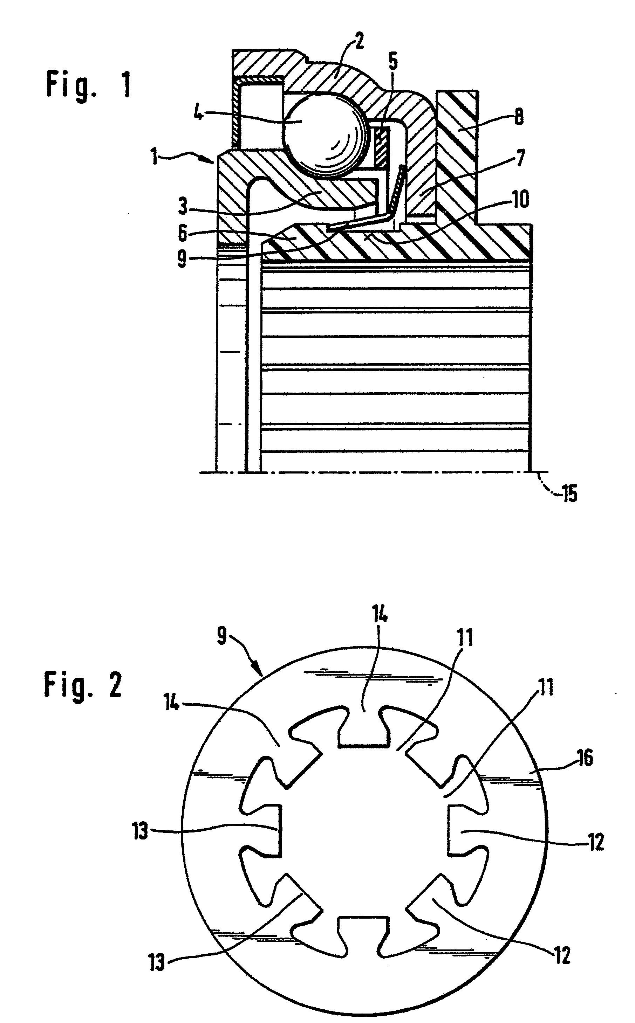

Das in Fig. 1 dargestellte Kupplungsausrücklager besteht aus einem Wälzlager 1 mit einem äußeren Laufring 2 und einem inneren Laufring 3 zwischen denen Kugeln 4 abrollen, die in einem Käfig 5 geführt sind. Das Wälzlager 1 ist radial verschiebbar auf eine Schiebehülse 6 aus polymerem Werkstoff angeordnet, wobei der äußere Laufring 2 einen Radialbord 7 aufweist, der zwischen einem Radialflansch 8 der Schiebehülse 6 einerseits und einer Tellerfeder 9 andererseits eingespannt ist, wobei sich die Tellerfeder 9 in einer Umfangsnut 10 der Schiebehülse 6 abstützt.

Die in Fig. 2 gezeigte Tellerfeder 9 ist in ihrem radial inneren Bereich 11 in einzelne Zungen 12 unterteilt, die an ihren der Nut 10 zugewandten Enden 13 deutlich breiter sind als an den entgegengesetzten Enden 14. Der radial innere Bereich 11 ist zur Achse 15 der Tellerfeder 9 bzw. des Kupplungsausrücklagers (siehe Fig. 1) geringer geneigt als ein radial äußerer Bereich 16 der Tellerfeder.

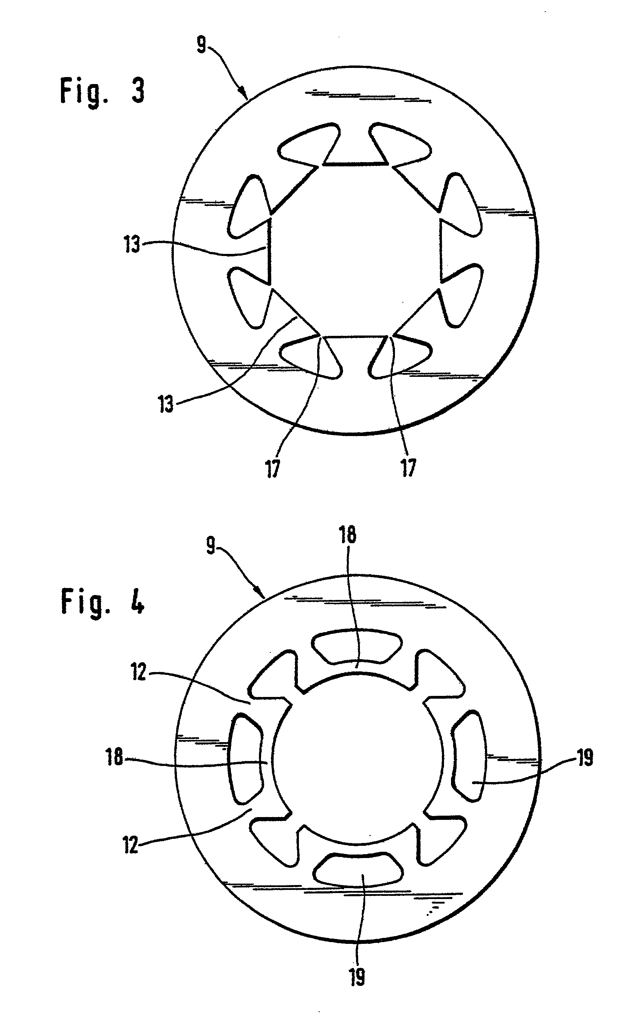

Fig. 3 zeigt eine Tellerfeder 9, bei der die der Nut 10 zugewandten Enden 13 so verbreitert sind, daß sie in Umfangsrichtung nur durch schmale Schlitze 17 voneinander getrennt sind.

Die in Fig. 4 gezeigte Ausführungsform der Tellerfeder 9 zeigt Stege 18 zwischen aufeinanderfolgenden Zungen 12, wobei zwischen den verbundenen Zungen 12 geschlossenen Ausnehmungen 19 verbleiben.

## Patentansprüche

1. Kupplungsausrücklager, bestehend aus einem Wälzlager (1) mit zwei konzentrischen Laufringen (2, 3), zwischen denen Wälzkörper (4) abrollen, und das radial verschiebbar auf einer Schiebehülse (6) aus polymerem Werkstoff angeordnet ist, und dessen einer Laufring einen Radialbord (7) aufweist, der zwischen einem Radialflansch (8) der Schiebehülse einerseits und einer Tellerfeder (9) andererseits eingespannt ist, die in ihrem radial inneren Bereich (11) in einzelne Zungen (12) unterteilt ist, mit denen sie sich in einer Umfangsnut (10) der Schiebehülse (6) abstützt, dadurch gekennzeichnet, daß die Zungen (12) an ihren der Nut (10) zugewandten Enden (13) deutlich breiter sind als an ihren entgegengesetzten Enden (14).

2. Kupplungsausrücklager nach Anspruch 1, dadurch gekennzeichnet, daß die der Nut (10) zugewandten Enden (13) so verbreitert sind, daß sie in Umfangsrichtung nur durch schmale Schlitze (17) voneinander getrennt sind.

3. Kupplungsausrücklager nach Anspruch 1, dadurch gekennzeichnet, daß die der Nut (10) zugewandten Enden (13) jeweils mehrerer aufeinanderfolgender Zungen (12) durch einen Steg (18) miteinander verbunden sind.

4. Kupplungsausrücklager nach Anspruch 1, dadurch gekennzeichnet, daß die Zungen (12) geringer zu einer Achse (15) der Tellerfeder (9) geneigt sind, als ein radial äußerer Bereich (16) der Tellerfeder (9).

## Claims

1. Clutch release bearing consisting of a rolling bearing (1) with two concentric bearing rings (2, 3) between which rolling elements (4) roll and which is arranged radially displaceable on a sliding sleeve (6) of polymer material and whose one bearing ring has a radial rim (7) which is clamped between a radial flange (8) of the sliding sleeve on one hand and a diaphragm spring (9) on the other hand, which in its radially inner area (11) is subdivided into individual fingers (12) with which it is supported in a peripheral groove (10) of the sliding sleeve (6), characterised in that the fingers (12) are clearly wider at their ends (13) facing the groove (10) than at their opposite ends (14).

2. Clutch release bearing according to claim 1, characterised in that the ends (13) facing the groove (10) are so widened that in peripheral direction they are separated from each other only by narrow slots (17).

3. Clutch release bearing according to claim 1, characterised in that the ends (13) facing the groove (10), of several successive fingers (12) are connected to each other by a web (18).

4. Clutch release bearing according to claim 1, characterised in that the fingers (12) are less inclined to an axis (15) of the diaphragm spring (9) than is a radially outer area (16) of the diaphragm spring (9).

**Revendications**

1. Butée de débrayage comprenant un roulement (1) comportant deux bagues de roulement concentriques (2, 3) entre lesquelles roulent des éléments roulants (4), et qui est placé de façon à pouvoir se déplacer radialement sur un manchon coulissant (6) en matière polymère, et dont l'une des bagues de roulement comporte un bord radial (7) qui est enserré entre une bride radiale (8) du manchon coulissant d'une part, et un ressort Belleville (9) d'autre part, lequel est subdivisé dans sa zone radialement intérieure (11) en languettes individuelles (12) par lesquelles il s'appuie dans une rainure périphérique (10) du manchon coulissant (6), caractérisé en ce que les languettes (12) sont nettement plus larges à leurs extrémités (13) situées du côté de la rainure (10) qu'à leurs extrémités (14) opposées.

2. Butée de débrayage suivant la revendication 1, caractérisée en ce que les extrémités (13) situées du côté de la rainure (10) sont élargies de telle façon qu'elles ne sont séparées mutuellement que par des fentes étroites (17) en direction périphérique.

3. Butée de débrayage suivant la revendication 1, caractérisée en ce que les extrémités (13) situées du côté de la rainure (10) de plusieurs languettes (12) successives respectives sont chaque fois reliées entre elles par une nervure (18).

4. Butée de débrayage suivant la revendication 1, caractérisée en ce que les languettes (12) sont plus faiblement inclinées par raport à un axe (15) du ressort Belleville (9) qu'une zone radialement extérieure (16) du ressort Belleville (9).

EP 0 247 400 B1

Fig. 1

Fig. 2

**Fig. 3**

9

13

13

17    17

**Fig. 4**

9    18

12

18

12

19

19